# FASCICULE DE BREVET EUROPEEN

(11) **EP 0 332 497 B1**
(45) Date de publication et mention de la délivrance du brevet: **20.01.1993**
(21) Numéro de dépôt: 89400541.2
(22) Date de dépôt: 27.02.1989
(51) Int. Cl.: F16C 25/08, F16C 33/60

(54) **Roulement à précontrainte réglable**
Wälzlager mit einstellbarer Vorspannung
Adjustable prestress roller bearing

(30) Priorité: 04.03.1988 FR 8802776
(43) Date de publication de la demande: 13.09.1989
(73) Titulaire: NADELLA, F-18102 Vierzon Cédex (FR)
(72) Inventeur: Stephan, Gérard, F-78290 Croissy-sur-Seine (FR); Labedan, Jean-Denis, F-18000 Bourges (FR)
(74) Mandataire: Mestre, Jean (FR)

(56) Documents cités:
- CH-A- 416 229
- DE-A- 2 115 283
- DE-U- 8 806 186
- FR-A- 784 279
- FR-A- 2 594 189

## Description

La présente invention concerne les roulements, notamment à billes, à précontrainte d'un type exposé dans le préambule de la revendication 1.

Les roulements à précontrainte sont bien connus dans la technique.

Parmi ceux-ci certains d'entre eux sont d'un type où au moins l'une des bagues est divisée en deux parties qui sont emboîtées, mobiles librement l'une dans l'autre, pour transmettre la précontrainte.

Un roulement de ce type est, par exemple, exposé dans FR-A-2 594 189. Ce document explique la manière de fabriquer un roulement précontraint comprenant un boîtier, une bague intérieure, une bague extérieure, des éléments de roulement telles des billes placées entre les bagues intérieure et extérieure, au moins une pièce élastique comprimée dans le boîtier entre ce dernier et l'une des bagues pour appliquer les éléments de roulement au contact des bagues intérieure et extérieure suivant des pistes circulaires. Ce roulement est tel que les billes suivent des pistes de contact qui sont les unes situées sur la bague intérieure et les autres sur la bague extérieure et il est fait de manière que l'une des bagues est constituée de deux parties sur chacune desquelles se situe l'une des piste de contact et qui sont emboîtées, mobiles librement l'une dans l'autre, pour transmettre la précontrainte de la partie élastique aux éléments de roulement.

On connaît tous les avantages qu'apporte ce type de roulement. Il permet un rattrapage automatique du jeu, il est autocentreur et autoadaptatif de la contrainte.

Ce type de roulement, s'il donne satisfaction pour de nombreuses applications, présente toutefois des difficultés de mise en oeuvre. C'est en particulier le cas lorsque la pièce mâle et/ou la pièce femelle entre lesquelles il est destiné à être placé est d'une nature telle que celle-ci peut servir, elle même, directement de bague. Dans un tel cas, les qualités de cette pièce, éventuellement, après avoir reçu un traitement approprié par exemple thermique, permettent de l'utiliser directement comme piste de contact sur laquelle roulent les éléments de roulement telles des billes.

C'est en particulier la situation qui se présente lorsque cette pièce est un arbre creusé d'une gorge périphérique destinée à recevoir les éléments de roulement.

En utilisant un roulement du type de celui décrit dans la demande indiquée, on peut imaginer, en lui conférant la précontrainte,la rigidité et l'effort axial de désengagement requis, qu'on puisse y engager l'arbre avec sa gorge sans qu'il soit nécessaire de conduire des opérations supplémentaires, plus ou moins complexes, sur le roulement.

Si l'on confère une précontrainte choisie convenablement, on peut faire en sorte que lorsqu'on engage l'arbre dans le roulement l'extrémité de ce dernier qui précède la gorge agisse sur les billes pour les refouler vers l'extérieur en écartant les deux parties de l'une des bagues, ici extérieure, contre lesquelles elles s'appuient, en augmentant momentanément la précontrainte. Lorsque les éléments de roulement sont à l'aplomb de la gorge ceux-ci s'y engagent sous l'action de la précontrainte qui a été momentanément augmentée et les deux parties de la bague temporairement éloignées reprennent leur position initiale relative.

Si un tel montage est, théoriquement, possible les caractéristiques qui lui sont conférées sont incompatibles avec un bon fonctionnement. En effet, si l'on veut pouvoir faire un montage aisé, il est clair que l'arbre peut se dégager spontanément sous l'effet d'un effort opposé à celui de l'assemblage et alors cet effort est trop faible, dans la plupart des cas, pour obtenir la sécurité recherchée.

Pour remédier à ce type de difficultés avec un roulement du type précédemment indiqué, il faut donc faire en sorte que ce roulement présente un premier état où l'on peut procéder à son montage et un deuxième état, différent du premier, où une fois le roulement mis en place celui-ci a les caratéristiques nécessaires à son fonctionnement normal.

L'état de la technique selon le préambule de la revendication 1 est connu du document CH-A-416 229, qui concerne un accouplement pour prise de force de tracteurs agricoles, et qui divulgue un dispositif qui comprend une bague de roulement à billes fendue circonférentiellement en deux parties gui définissent chacune une piste circulaire, qui sont relativement mobiles axialement ainsi qu'un ressort apte à développer un effort axial.

Le but de l'invention vise à fabriquer un roulement à précontrainte où celle-ci est réglable entre un premier état où elle a une valeur qui permet sa mise en place et un second état où mise en place faite, celle-ci à la valeur requise pour le bon fonctionnement du roulement.

Le roulement précontraint selon l'invention est caractérisé par les caractéristiques de la deuxième partie la revendication 1.

D'autres caractéristiques de l'invention ressortiront des revendications dépendantes et du dessin annexé, donné seulement à titre d'exemple, où:
- la Fig.1 illustre un premier type de roulement, dans différentes phases A, B, C de sa mise en place ;
- la Fig.2 est une vue annalogue à celle de la Fig.1 d'un autre type de roulement ;
- la Fig.3 est une vue d'un premier mode de réalisation d'un roulement selon l'invention, où le roulement est en place mais pas encore en précontrainte maximale ;
- la Fig.4 est une vue analogue à celle de la Fig.3 d'une autre variante de l'exécution selon l'invention; et
- la Fig.5 est une vue d'une autre variante d'exécution analogue à celle des Fig.3 et 4.

Les roulements précontraints, notamment à billes, sont bien connus dans la technique. C'est pourquoi dans la description qui suit ne sera exposé que ce qui concerne l'invention. Pour le surplus le spécialiste du domaine concerné puisera dans les solutions classiques à sa disposition pour résoudre les problèmes particuliers auxquels il a à faire face.

Dans la suite de la description on utilisera un même numéro de référence pour désigner des éléments homologues quel que soit le mode de réalisation de l'invention.

Dans ce qui suit, on suppose qu'un roulement à précontrainte selon l'invention est destiné à être utilisé avec un arbre muni d'une gorge qui sert directement d'autre bague avec une piste de roulement circulaire. Il est clair que l'invention peut être transposée aisément de manière qu'un roulement suivant l'invention ne coopère pas avec un arbre placé axialement à son intérieur mais avec un alésage qui est alors placé à son pourtour. Les transpositions sont aisées sans pour autant modifier l'invention.

Un roulement précontraint comprend, pour les modes de réalisation dessinés, un boîtier 10, des éléments de roulement 20 telles des billes, éventuellement et de préférence retenues dans une cage non dessinée, une bague 30 faite de deux parties 31 et 32 et un dispositif élastique de précontrainte 50 susceptible de prendre deux états, un premier état où la contrainte est pratiquement inactive pour assurer le montage et un deuxième état où la contrainte est active de manière à ce que montage fait le roulement suivant l'invention puisse fonctionner normalement.

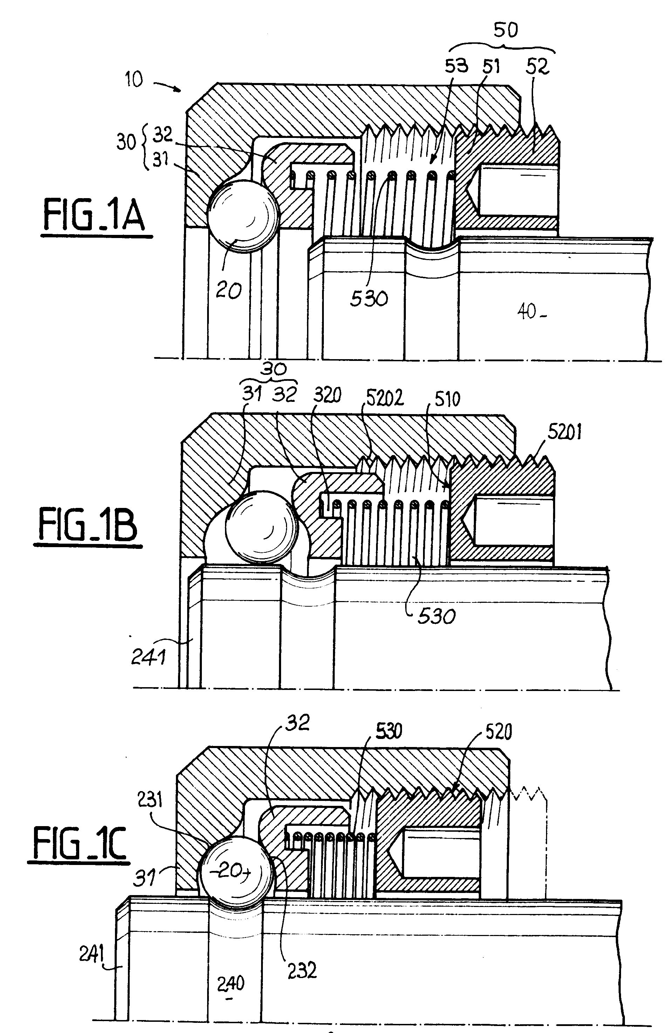

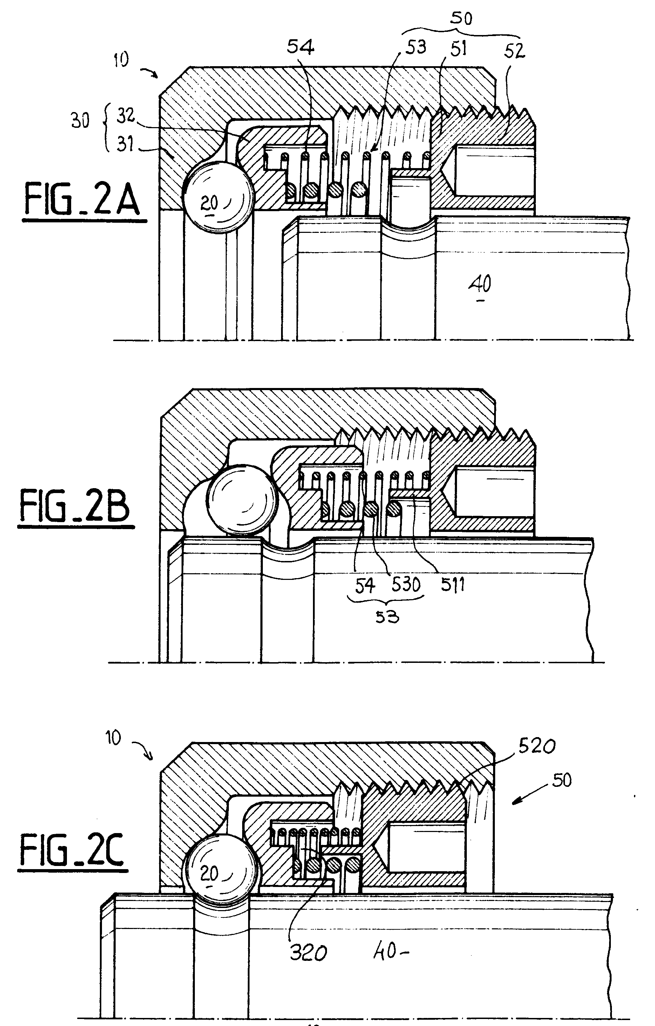

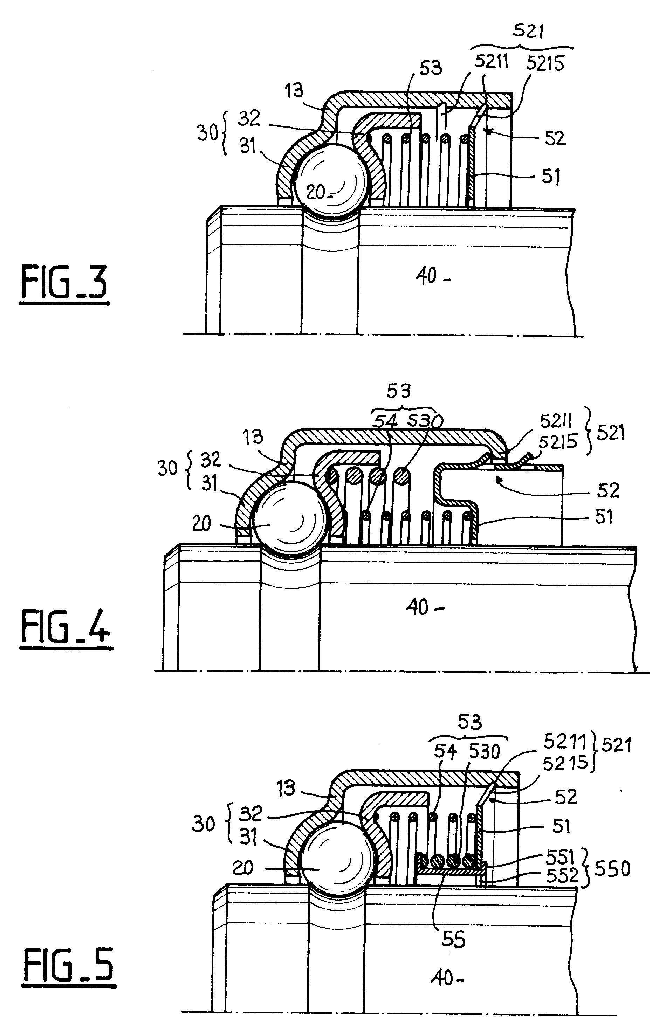

Dans les modes de réalisation illustrés, le boîtier 10 est à paroi épaisse (Fig.1 et 2) ou à paroi mince (Fig.3,4,5). Les techniques de fabrication et d'usinage de ce type de boîtier sont classiques.

Comme on le voit, dans tous les modes de réalisation, le boîtier 10 est associé directement à l'une des parties 31 de la bague 30. Le boîtier 10 et la partie 31 sont, par exemple, faits d'un seul tenant et se présentent à la manière de douille 13. L'autre partie 32 de la bague 30 se présente à la manière d'une coupelle qui peut se déplacer relativement librement dans le boîtier ou douille de manière à pouvoir y coulisser axialement.

Les éléments de roulement 20, ici des billes, sont destinées à prendre appui sur au moins chacune des parties 31 et 32 suivant des pistes circulaires 231 et 232 respectivement.

Les éléments de roulement 20 sont destinés à circuler sur au moins une autre piste d'une autre bague. Dans les modes de réalisation illustrés, cette autre bague 40 est un arbre qui présente une autre piste 240 que décriront les éléments de roulement. Cette piste 240 est, par exemple, délimitée par une gorge à section droite méridienne en arc de cercle.

Comme on l'a indiqué le roulement précontraint est équipé d'un dispositif élastique de précontrainte 50 réglable entre deux états. Un premier état où la précontrainte est pratiquement inactive pour permettre le montage du roulement, ici l'enfilage de l'arbre, et une deuxième état où la précontrainte est active pour montage fait permettre un fonctionnement normal du roulement avec la précontrainte requise au bon usage.

Le dispositif élastique de précontrainte réglable 50 comprend un appui 51, des moyens de retenue 52 et un organe élastique 53.

L'appui 51 se présente à la manière d'une couronne 510 permettant le passage libre de l'autre bague 40 ici l'arbre.

Les moyens de retenue 52 sont destinés à assujettir l'appui 51 au boîtier 10. Ces moyens de retenue sont réglables entre une première position de manière à placer le dispositif dans son premier état et au moins une deuxième position pour placer le dispositif dans son second état.

Comme on le verra, dans tous les modes de réalisation décrits, l'appui 51 et les moyens de retenue sont faits d'un seul tenant. Mais il est clair que l'appui et les moyens de retenue peuvent être distincts sous forme de constituants séparés.

L'organe élastique 53 du dispositif de roulement selon l'invention est, par exemple, un ressort à boudin 530 dont l'une des extrémités repose contre l'appui 51 et dont l'autre des extrémités repose contre la partie 32, comme illustré.

On se reportera maintenant, plus particulièrement, aux Fig.1A, 1B et 1C où un premier mode de réalisation d'un roulement est représenté dans différentes étapes de sa mise en place. Dans ce mode de réalisation, les moyens de retenue 52 se présentent sous la forme d'un mécanisme à vis et écrou 520.

Comme on le voit, l'appui 51 se présente à la manière d'une vis portant des filets 5201 qui sont engagés dans un taraudage 5202 ménagé dans le boîtier 10.

Le ressort à boudin 530 est appliqué contre une face plane en couronne 510 de l'appui 51 et une gouttière 320 ménagée dans l'autre partie 32 qui se présente à la manière d'une coupelle.

Sur la Fig.1A, le mode de réalisation d'un roulement suivant l'invention est illustré dans la position qu'occupe le dispositf élastique quand il est dans son premier état où la précontrainte est pratiquement inactive pour permettre le montage.

Comme on l'y voit dans ce cas, les moyens de retenue sont pratiquement desserrés et dégagés du boîtier. Dans une telle situation le ressort à boudin 530 qui constitue l'organe élastique n'est pratiquement pas bandé. L'autre bague 40, ici l'arbre avec son autre piste 240 qui se présente sous la forme d'une gorge, est juste engagée et occupe la position où elle est illustrée.

Sur la Fig.1B est représentée une étape intermédiaire où le dispositf élastique est toujours dans son premier état. On voit que si l'on poursuit l'engagement de l'arbre 40, un biseau ou chanfrein 241 rencontre les billes 20 et les refoule vers l'extérieur. En faisant ceci, les billes écartent l'une de l'autre les deux parties 31 et 32 de la bague 30 du fait du petit effort qu'exerce le ressort 530 qui n'est pratiquement pas bandé. En pousuivant l'enfoncement de l'arbre, les billes 20 arrivent à l'aplomb de la gorge 240 et s'y engagent sous l'action du ressort 530 et l'autre partie 32 de la bague 30 reprend sa position initiale. Cette situation est celle illustrée sur la Fig.1C pour partie en trait discontinu.

Il suffit alors de serrer les moyens de retenue à l'aide d'une clé appropriée pour les faire passer dans la deuxième position afin de conférer au dispositif élastique son second état.

Comme on le voit sur la Fig.1C, en trait continue le ressort 530 est alors comprimé pour exercer la précontrainte nécessaire à un bon fonctionnement.

Avec ce type de solution à mécanisme à vis et écrou il est possible de régler avec une grande précision et progressivement la précontrainte de manière à pouvoir tenir compte des petites dispersions des valeurs des ressorts que l'on rencontre couramment en fabrication en série.

On se reportera maintenant aux Fig.2A, 2B et 2C où est illustrée une variante d'exécution du mode de réalisation de Fig.1. Dans ce mode de réalisation, l'organe élastique 53 est dédoublé et on lui a associé un élément élastique 54 ici un autre ressort à boudin 540 dont les caractéristiques sont différentes de celles du ressort à boudin 530.

Comme on peut l'observer, l'appui 51 en couronne 510 est muni d'une nervure ou bourrelet 511 qui sépare les deux ressorts et la partie 32 présente une gouttière double 320 étagée. Pour le reste ce mode de réalisation est analogue à celui de la Fig.1.

Les Fig.2A, 2B et 2C correspondent aux situations illustrées aux Fig.1A, 1B et 1C, c'est pourquoi on ne s'y étendra pas davantage.

Ce qui distingue les modes de réalisation des Fig.1 et 2, réside dans le dédoublement de l'organe élastique. Le ressort à boudin 530 n'exerce pratiquement aucune contrainte lorsque le dispositif est dans son premier état illustré sur la Fig.2A et une relativement toute petite contrainte est exercée par le ressort à boudin 540. De préférence, il existe, comme on peut l'observer, un jeu suffisant de manière que le ressort à boudin 530 ne vienne jamais simultanément au contact de la partie 32 et de l'appui 51 lorsque le dispositif est dans son premier état. De la sorte on peut facilement mettre en place l'arbre sous la petite contrainte qu'exerce le ressort 540.

Mise en place faite de l'arbre, on serre le mécanisme à vis et écrou de manière que le ressort à boudin 530 prenne appui simultanément contre la partie 32 et l'appui 51. La rigidité du ressort 530 est adaptée au fonctionnement sous contrainte du roulement selon l'invention mais comme on voit il ne se trouve pas comprimé pendant la phase de montage. L'existence du jeu permet donc un déplacement relatif aisé des deux parties 31 et 32 de la bague 30 sous la poussée des billes 20 qui reculent momentanément lors de la mise en place de l'arbre 40. Il suffit alors de serrer le mécanisme à vis et écrou 520 pour le placer dans la position où il est illustré sur la Fig.2C.

Comme précédemment indiqué, on peut régler avec précision la valeur de la précontrainte initiale. L'appui peut être tel que le ressort 530 repose juste contre l'appui ou bien il est quelque peu prébandé.

On se reportera maintenant aux Fig.3, 4 et 5 où sont représentées des variantes d'exécution du roulement selon l'invention. Ces figures correspondent à la situation des Fig.1C et 2C où l'autre bague est mise en place. Ces diverses figures différent essentiellement par les modes de réalisation des moyens de retenue 52.

Dans ces divers modes de réalisation ces moyens 52 sont constitués par des mécanismes à encliquetage 521.

Comme on le voit le mécanisme à encliquetage 521 se compose d'une butée 5211 associée au boîtier 10. Cette butée 5211 se présente à la manière d'au moins un sillon (Fig.3, 5) ou d'un rebord (Fig.4). Ce mécanisme comprend, aussi, une arête 5215 associée à l'appui 51. Sur les Fig.3 et 5, cette arête se présente à la manière d'une collerette et sur la Fig.4 à la manière de deux ergots successifs.

Pour faire passer le dispositif élastique 50 de son premier état à son second état il suffit de déplacer le mécanisme à encliquetage 521 de sa première (illustrée sur les Fig.3 et 4) à sa deuxième position. Le passage de la première à la deuxième position du mécanisme à encliquetage est opéré après mise en place de la bague 40.

Comme on le voit, ici encore, l'appui 51 et les moyens de retenue 52 sont d'un seul tenant. Ils sont obtenus à partir de tôles minces, en matériau approprié, qui sont conformées par exemple par des techniques d'emboutissage classiques. Sur la Fig.4, les ergots présentent une certaine élasticité de manière à pouvoir franchir successivement le rebord.

En examinant le mode de réalisation illustré sur la Fig.5, on voit que le mécanisme à encliquetage 521 est associé à un manchon 55 qui est monté sur l'appui 51 à l'aide d'une liaison 550 frangible. Cette liaison 550 frangible est constituée de pattes 551 portées par le manchon 55 qui sont engagées dans des découpes 552 complémentaires de l'appui 51. Ces pattes 551 sont rabattues, comme illustrées, de manière à retenir le ressort 530 à l'état comprimé.

L'autre bague 40 étant en place il suffit alors de rompre les pattes 551 de la liaison frangible 550 pour libérer le ressort 530 qui passe alors de son premier état seul dessiné où la précontrainte est pratiquement inactive à son deuxième état, non illustré, où la précontrainte est active et d'une valeur qui permet le fonctionnement normal du roulement selon l'invention.

On comprend tous les avantages qu'offre le roulement selon l'invention.

Il autorise des réductions importantes de coût de montage et aussi des coûts réduits de fabrication puisqu'il ne comprend qu'une bague qui porte une partie des pistes que suivent les éléments de roulement alors que l'autre bague qui porte la ou les pistes de roulement complémentaires ne fait pas partie de l'entité du roulement proprement dit. Cette suppression temporaire de l'une des bagues permet aussi une réduction de l'encombrement radial.

On voit donc tout l'intérêt qu'offre le roulement à précontrainte perfectionné suivant l'invention aussi bien pour sa fabrication que pour sa mise en place et pour son fonctionnement.

## Revendications

1. Roulement précontraint comprenant un boîtier (10), des éléments de roulement (20) circulant suivant deux pistes circulaires, au moins une bague (30) constituée de deux parties (31, 32) sur chacune desquelles est située l'une de ces pistes (231, 232) et un dispositif élastique (50) coopérant avec ce boîtier (10) et au moins l'une de ces parties (31, 32) de manière à solliciter axialement l'une vers l'autre ces deux pistes circulaires (231, 232) pour exercer une précontrainte et où ces éléments (20) sont destinés à venir s'appuyer sur une autre bague (40) suivant au moins une autre piste (240) circulaire, **caractérisé en ce que** ces deux parties (31, 32) sont emboîtées mobiles librement l'une dans l'autre de manière à pouvoir coulisser axialement, en ce que ce dispositif élastique de précontrainte (50) est réglable entre un premier état où la contrainte a une intensité permettant de mettre en place les éléments de roulement (20) au contact de cette autre autre piste (240) de cette autre bague (40) et un second état où la précontrainte a une intensité plus importante permettant aux éléments de roulement (20) placés au contact de ces trois pistes (231, 232, 240) au moins de circuler avec la précontainte requise au fonctionnement normal du roulement, en ce que le dispositif élastique (50) comprend un appui (51) associé au boîtier (10) et permettant le passage de cette autre bague (40), des moyens de retenue (52) pour assujettir l'appui (51) à ce boîtier (10) de manière à être réglable entre une première position où le dispositif élastique est dans son premier état et au moins une deuxième position où le dispositif élastique est dans son deuxième état, et au moins un organe élastique (53) disposé entre cet appui (51) et l'une de ses parties (31, 32) de la bague et en ce que les moyens de retenue (52) sont constitués d'un mécanisme à encliquetage (521).

2. Roulement selon la revendication 1 , caractérisé en ce que le mécanisme à encliquetage (521) comprend au moins une arête (5215) portée par l'appui (51) et une butée (5211) portée par le boîtier (10).

3. Roulement selon la revendication 2, caractérisé en ce que l'arête (5215) est une collerette périphérique de l'appui (51) et en ce que la butée (5211) est un sillon ménagé dans le boîtier (10).

4. Roulement selon la revendication 2, caractérisé en ce que l'arête (5215) est au moins un ergot périphérique relativement élastique de l'appui (51) et en ce que la butée (5211) est un rebord centripète du boîtier (10).

5. Roulement selon l'une quelconque des revendications 1 et 4, caractérisé en ce que l'organe élastique (53) est destiné à reposer dans une gouttière (320) de cette autre partie (32) de la bague (30).

6. Roulement selon l'une quelconque des revendications 2 à 5, caractérisé en ce que cet organe élastique (53) est porté par un manchon (55) et en ce que ce manchon (55) est monté sur l'appui (51) à l'aide d'une liaison (550) frangible.

7. Roulement selon l'une quelconque des revendications précédentes,caractérisé en ce que l'organe élastique (53) est dédoublé et comprend aussi un élément élastique (54) interposé entre l'appui (51) et l'une de ces parties (31, 32) de manière à tendre à les éloigner l'une de l'autre pour créer ce premier état.

8. Roulement selon l'une des revendications précédentes, caractérisé en ce que ce boîtier (10) et l'une (31) de ces parties sont d'un seul tenant en forme de douille (13) et en ce que cette autre partie (32) est logée dans cette douille (13).

9. Roulement selon l'une quelconque des rerevendications précédentes, caractérisé en ce que cet appui (51) est une couronne (510) destinée à être logée au moins partiellement dans le boîtier (10).

10. Roulement selon l'une quelconque des revendications précédentes, caractérisé en ce que cet organe élastique (52) est un ressort à boudin (53) dont l'une des extrémités est destinée à venir en contact de cet appui (51) et l'autre des extrémités est destinée à venir au contact de cette autre partie (32).

11. Roulement selon l'une quelconque des revendications précédentes, caractérisé en ce que les moyens de retenue (52) dans leur première position maintiennent l'organe élastique (53) dans son premier état et dans leur deuxième position placent l'organe élastique (53) dans son second état.

12. Roulement selon la revendication 11,caractérisé en ce que lorsque les moyens de retenue (52) sont dans leur première position l'organe élastique (53) n'est pratiquement pas sous contrainte et lorsque ces moyens de retenue sont dans leur deuxième position l'organe élastique (53) est comprimé.

13. Roulement selon l'une quelconque des revendications 7 à 11, caractérisé en ce que lorsque les moyens de retenue (52) occupent leur première position l'organe élastique dédoublé (53) est comprimé et lorsqu'ils occupent leur deuxième position l'organe élastique (53) est libéré.

14. Roulement selon l'une quelconque des revendications 1 à 13, caractérisé en ce que cette bague (30) est la bague extérieure et où cette autre bague (40) est la bague intérieure constituée d'un arbre dans lequel est ménagée une gorge périphérique constituant cette autre piste (240) circulaire

15. Roulement selon l'une quelconque des revendications 1 à 13 caractérisé en ce que cette bague (30) est la bague intérieure et où cette autre bague (40) est la bague extérieure constituée d'un alésage.

## Patentansprüche

1. Vorgespanntes Wälzlager, mit einem Gehäuse (10), entlang zweier kreisförmiger Bahnen umlaufenden Wälzlagerelementen (20), wenigstens einem Ring (30), aufgebaut aus zwei Teilen (31, 32), wobei auf jedem eine der Bahnen (231, 232) angelegt ist, und einer elastischen Vorrichtung (50), die mit diesem Gehäuse (10) und wenigstens einem der Teile (31, 32) so zusammenwirkt, daß diese beiden Bahnen (231, 232) eine gegen die andere axial belastet werden, um eine Vorspannung auszuüben, und wobei diese Elemente (20) dazu bestimmt sind, zum Anliegen an einen weiteren Ring (40) zu kommen, entlang wenigstens einer weiteren kreisförmigen Bahn (240), dadurch gekennzeichnet, daß diese beiden Teile (31, 32) frei beweglich so ineinandergefügt sind, daß sie axial gleiten können, daß die elastische Vorspannungsvorrichtung (50) zwischen einem ersten Zustand, in dem die Spannung eine erste Stärke hat, die es ermöglicht, daß die Wälzlagerelemente (20) in Kontakt mit dieser weiteren Bahn dieses weiteren Ringes (40) eingestellt sind, und einem zweiten Zustand, in dem die Vorspannung eine größere Stärke hat, die es den in Kontakt mit diesen drei Bahnen (231, 232, 240) eingestellten Wälzlagerelementen ermöglicht, mit wenigstens der für den normalen Lauf des Wälzlagern erforderlichen Vorspannung umzulaufen, einstellbar ist, daß die elastische Vorrichtung (50) eine Auflage (51), dem Gehäuse (10) zugeordnet und den Durchlauf dieses weiteren Ringes (40) ermöglichend, Haltemittel (52) zum Festlegen der Auflage (51) an diesem Gehäuse (10), so daß sie zwischen einer ersten Stellung, in der die elastische Vorrichtung in ihrem ersten Zustand ist, und wenigstens einer zweiten Stellung, in der die elastische Vorrichtung in ihrem zweiten Zustand ist, einstellbar ist, und wenigstens eine elastische Einrichtung (53), die zwischen dieser Auflage (51) und einem der teile (31, 32) des Ringes angeordnet ist, aufweist, und daß die Haltemittel (52) aus einem Sperrklinkenmechanismus (521) aufgebaut sind.

2. Wälzlager nach Anspruch 1, dadurch gekennzeichnet, daß der Sperrklinkenmechanismus (521) wenigstens eine von der Auflage (51) getragene Kante (5215) und einen von dem Gehäuse (10) getragenen Anschlag (5211) aufweist.

3. Wälzlager nach Anspruch 2, dadurch gekennzeichnet, daß die Kante (5215) ein Umfangskragen der Auflage (51) ist und daß der Anschlag (5211) eine in dem Gehäuse (10) angebrachte Furche ist.

4. Wälzlager nach Anspruch 2, dadurch gekennzeichnet, daß die Kante (5215) wenigstens ein am Umfang verlaufender relativ elastischer Vorsprung der Auflage (51) ist und daß der Anschlag (5211) eine zu dessen Mittelpunkt hin weisende Leiste des Gehäuses (10) ist.

5. Wälzlager nach einem der Ansprüche 1 und 4, dadurch gekennzeichnet, daß die elastische Einrichtung (53) dazu bestimmt ist, in einer Rinne (320) dieses weiteren Teiles (32) des Ringes (30) zu ruhen.

6. Wälzlager nach einem der Ansprüche 2 bis 5, dadurch gekennzeichnet, daß diese elastische Einrichtung (53) von einer Hülse (55) getragen ist und daß diese Hülse (55) an der Auflage (51) mit Hilfe einer aufbrechbaren Verbindung (550) angebracht ist.

7. Wälzlager nach einem der vorangehenden Ansprüche, dadurch gekennzeichnet, daß die elastische Einrichtung (53) geteilt ist und weiterhin ein elastisches Element (54) aufweist, das zwischen die Auflage (51) und eines dieser Teile (31, 32) so gelegt ist, daß es das Entfernen der einen von dem anderen begünstigt, um diesen ersten Zustand zu erzeugen.

8. Wälzlager nach einem der vorangehenden Ansprüche, dadurch gekennzeichnet, daß dieses Gehäuse (10) und das eine (31) dieser Teile einstückig in Form einer Einfassung (13) sind und daß dieses andere Teil (32) in der Einfassung (13) untergebracht ist.

9. Wälzlager nach einem der vorangehenden Ansprüche, dadurch gekennzeichnet, daß diese Auflage (51) eine Krone (510) ist, dazu bestimmt, wenigtens teilweise in dem Gehäuse (10) untergebacht zu sein.

10. Wälzlager nach einem der vorangehenden Ansprüche, dadurch gekennzeichnet, daß die elastische Einrichtung (52) eine Schraubenfeder (53) ist, deren eines äußeres Ende dazu bestimmt ist, in Kontakt mit dieser Auflage (51) zu kommen, und deren anderes äußeres ende dazu bestimmt ist, in Kontakt mit diesem anderen Teil (32) zu kommen.

11. Wälzlager nach einem der vorangehenden Ansprüche, dadurch gekennzeichnet, daß die Haltemittel (52) in ihrer ersten Stellung die elastische Einrichtung (53) in ihrem ersten Zustand halten und in ihrer zweiten Stellung die elastische Einrichtung (53) in ihren zweiten Zustand bringen.

12. Wälzlager nach Anspruch 11, dadurch gekennzeichnet, daß, wenn die Haltemittel (52) in ihrer ersten Stellung sind, die elastische Einrichtung (53) praktische nicht unter Spannung ist, und, wenn diese Haltemittel in ihrer zweiten Stellung sind, die elastische Einrichtung (53) zusammengedrückt ist.

13. Wälzlager nach einem der Ansprüche 7 bis 11, dadurch gekennzeichnet, daß, wenn die Haltemittel (52) ihre erste Stellung einnehmen, die geteilte elastische Einrichtung (53) zusammengedrückt ist, und, wenn sie ihre zweite Stellung einnehmen, die elastische Einrichtung (53) freigegeben ist.

14. Wälzlager nach einem der Ansprüche 1 und 13, dadurch gekennzeichnet, daß dieser Ring (30) der Außenring ist, und wobei dieser weitere Ring (40) der Innenring ist, gebildet aus einer Welle, in der eine Umfangskehlung angebracht ist, die diese weitere kreisförmige Bahn (240) bildet.

15. Wälzlager nach einem der Ansprüche 1 und 13, dadurch gekennzeichnet, daß dieser Ring (30) der Innenring ist, und wobei dieser weitere Ring (40) der Außenring ist, der durch eine Bohrung gebildet ist.

## Claims

1. Prestressed rolling bearing comprising a housing (10), rolling members (20) circulating along two circular raceways, at least one ring (30) consisting of two parts (31, 32) on each of which one of these raceways (231, 232) is located and an elastic device (50) interacting with this housing (10) and a least one of these parts (31, 32) so as to urge these two circular raceways (231, 232) axially towards each other in order to exert a prestress and in which these members (20) are intended to bear on another ring (40) along at least one other circular raceway (240), characterised in that these two parts (31, 32) are fitted together so as to move freely, one inside the other, in such a manner as to be able to slide axially, that this elastic prestressing device (50) can be adjusted between a first state, in which the stress has a magnitude enabling the rolling members (20) to be put in place in contact with this other raceway (240) of this other ring (40), and a second state, in which the prestress has a greater magnitude enabling the rolling members (20) placed in contact with these three raceways (231, 232, 240) at least to circulate with the prestress required for normal operation of the rolling bearing, in that the elastic device (50) comprises a support (51) associated with the housing (10) and permitting the passage of this other ring (40), retention means (52) for securing the support (51) to this housing (10) so as to be adjustable between a first position, where the elastic device is in its first state, and at least a second position in which the elastic device is in its second state, and at least one elastic component (53) disposed between this support (51) and one of its parts (31, 32) of the ring and in that the retention means (52) consist of a ratchet mechanism (521).

2. Rolling bearing according to Claim 1, characterised in that the ratchet mechanism (521) comprises at least one ridge (5215) carried by the support (51) and a stop (5211) carried by the housing (10).

3. Rolling bearing according to Claim 2, characterised in that the ridge (5215) is a peripheral flange of the support (51) and in that the stop (5211) is a groove made in the housing (10).

4. Rolling bearing according to Claim 2, characterised in that the ridge (5215) is at least one relatively elastic peripheral tab of the support (51) and in that the stop (5211) is a centripetal rim of the housing (10).

5. Rolling bearing according to either of Claims 1 and 4, characterised in that the elastic component (53) is intended to rest on a channel (320) of this other part (32) of the ring (30).

6. Rolling bearing according to any one of Claims 2 to 5, characterised in that this elastic component (53) is carried by a sleeve (55) and in that this sleeve (55) is mounted on the support (51) with the aid of a frangible linkage (550).

7. Rolling bearing according to any one of the preceding claims, characterised in that the elastic component (53) is split into two and also comprises an elastic member (54) interposed between the support (51) and one of these parts (31, 32) so as to move them apart in order to create this first state.

8. Rolling bearing according to one of the preceding claims, characterised in that this housing (10) and one (31) of these parts are made as a single piece in the form of a holder (13) and in that this other part (32) in housed in this holder (13).

9. Rolling bearing according to any one of the preceding claims, characterised in that this support (51) is a collar (510) intended to be housed, at least partially in the housing (10).

10. Rolling bearing according to any one of the preceding claims, characterised in that this elastic component (53) is a coil spring (53), one of the ends of which is intended to come into contact with this support (51) and the other end of which is intended to come into contact with this other part (32).

11. Rolling bearing according to any one of the preceding claims, characterised in that the retention means (52) in their first position retain the elastic component (53) in its first state and in their second position place the elastic component (53) in its second state.

12. Rolling bearing according to Claim 11, characterised in that, when the retention means (52) are in their first position, the elastic component (53) is barely under stress and when these retention means are in their second position the elastic component (53) is compressed.

13. Rolling bearing according to any one of Claims 7 to 11, characterised in that, when the retention means (52) occupy their first position, the elastic component (53) split into two is compressed and when they occupy their second position the elastic component (53) is released.

14. Rolling bearing according to any one of Claims 1 to 13, characterised in that this ring (30) is the outer ring and where this other ring (40) is the inner ring consisting of a shaft in which a peripheral groove is made consitituting this other circular raceway (240).

15. Rolling bearing according to any one of Claims 1 to 13, characterised in that this ring (30) is the inner ring and where this other ring (40) is the ring race consisting of a bore.
